# DEMANDE DE BREVET EUROPEEN

(11) **EP 1 148 190 A1**
(43) Date de publication de la demande: **24.10.2001**
(21) Numéro de dépôt: 01109607.0
(22) Date de dépôt: 18.04.2001
(51) Int. Cl.: E05B 49/00, G01S 13/76, G06K 7/00

(54) **Procédé de sécurisation d'une communication pour un système d'accès dit mains libres**

(30) Priorité: 18.04.2000 FR 0004990
(71) Demandeur: Valeo Electronique, 94042 Créteil (FR); Valeo Securité Habitacle, 94042 Créteil (FR)
(72) Inventeur: Gascher, Alain, 75011 Paris (FR)
(74) Mandataire: Croonenbroek, Thomas

(57) **Abrégé**

Le procédé de sécurisation d'une communication entre un dispositif de reconnaissance et un organe d'identification apte à communiquer avec le dispositif de reconnaissance par un échange de données déterminé par un protocole de reconnaissance, une de ces donnée correspondant à un événement de référence, le procédé communiquant de manière à ce que le dispositif de reconnaissance puisse authentifier l'organe d'identification pour commander le déverrouillage d'ouvrants d'un véhicule et/ou autoriser le démarrage d'un véhicule et comportant en outre :
- après un temps d'initialisation défini par rapport à l'événement référentiel du protocole de reconnaissance, une étape d'émission par le dispositif de reconnaissance d'au moins deux données d'émission,
- une étape d'émission par l'organe d'identification d'au moins deux données de réponse en réponse aux données d'émission,
- une étape de mesure d'un temps de réaction entre l'émission d'une donnée et la réception d'une donnée réponse correspondante par le dispositif de reconnaissance, et une étape de vérification que le temps de réaction mesuré est inférieur à un seuil prédéterminé
caractérisé en ce que on fait varier aléatoirement l'intervalle de temps entre l'émission de deux données d'émission successives et/ou le temps d'initialisation.

## Description

L'invention porte sur un procédé de sécurisation d'une communication entre un dispositif de reconnaissance et un organe d'identification apte à communiquer avec le dispositif de reconnaissance de manière à ce que le dispositif de reconnaissance puisse authentifier l'organe d'identification pour commander le déverrouillage d'ouvrants d'un véhicule et/ou autoriser le démarrage d'un véhicule.

Un tel dispositif de reconnaissance avec un organe d'identification constitue un système d'accès dit « mains libres ». Dans un tel système d'accès, le dispositif de reconnaissance émet un signal constitué de données à une certaine distance autour du véhicule. Lorsque l'utilisateur porteur de l'organe d'identification est situé dans le champs d'émission du signal, il émet des données de réponse. Si ces données de réponse sont reconnues par le dispositif de reconnaissance, il commande le déverrouillage d'ouvrants du véhicule et/ou autorise le démarrage du véhicule.

Ainsi, l'utilisateur peut déverrouiller les ouvrants de son véhicule sans avoir à manipuler de clé ni de télécommande : le simple fait d'être porteur d'un organe d'identification, qui peut être un badge, lui permet de voir son véhicule se déverrouiller.

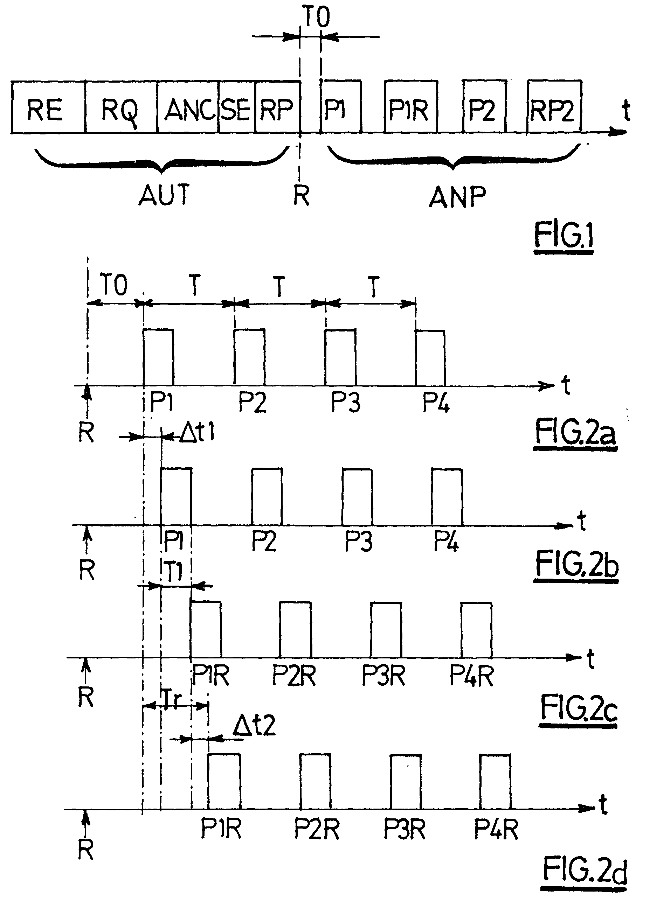

La figure 1 représente un exemple d'échange de données entre un dispositif de reconnaissance et un organe d'identification. Cet échange de données est généralement appelé protocole de reconnaissance. Il suit une séquence prédéterminée constituée par exemple d'une phase d'authentification AUT et d'une phase d'antipiratage ANP. La phase d'authentification AUT comprend une étape d'initialisation ou de réveil RE, une étape de requête RQ, une étape d'anticollision ANC, une étape de sélection SE et éventuellement une étape de réponse RP. La phase d'antipiratage comprend des étapes d'émission de données d'émission P1 et de réception de données de réponse P1R. L'étape de réponse RP peut éventuellement être combinée avec la phase d'antipiratage ANP.

Dans un tel système, la communication bidirectionnelle sous forme d'échange de données entre le dispositif de reconnaissance et l'organe d'identification a généralement pour but que le dispositif de reconnaissance authentifie l'organe d'identification, d'une part en vérifiant sa signature et d'autre part, en évaluant un temps de réaction dans l'échange de données.

L'évaluation d'un temps de réaction a pour objectif de détecter un piratage par répéteur: si un premier pirate, muni d'un premier relais émetteur-récepteur, situé à proximité du véhicule, est en relation avec un second pirate, munis d'un second relais émetteur -récepteur situé à proximité du porteur de l'organe d'identification, les deux pirates sont en mesure de déclencher un échange de données entre le dispositif de reconnaissance et l'organe d'identification, à l'insu du porteur de l'organe d'identification.

Cela étant, le répéteur ainsi constitué augmente nécessairement le temps de réaction dans l'échange de données entre un dispositif de reconnaissance et l'organe d'identification. En évaluant un temps de réaction, un dispositif de reconnaissance peut donc détecter un piratage par répéteur, et par-là même, ne pas commander le déverrouillage des ouvrants du véhicule. Un dispositif de reconnaissance de ce type est connu notamment par le document DE 198 02 526.

Les figures 2a à 2d sont des représentations graphiques d'un d'échange de données entre un dispositif de reconnaissance tel que celui divulgué dans le document DE 198 02 526 et un organe d'identification en présence d'un relais pirate.

En particulier, la figure 2a représente l'évolution au cours du temps des données émises par le dispositif de reconnaissance.

On appelle événement de référence R, un événement quelconque du protocole de reconnaissance identifiable comme point de repère par un relais pirate.

Le dispositif de reconnaissance émet une donnée d'émission P1 vers l'organe d'identification après un temps d'initialisation To défini par rapport à l'événement référentiel R du protocole de reconnaissance. Après réception d'une donnée de réponse P1R, le dispositif de reconnaissance émet une donnée d'émission P2. L'intervalle de temps T entre l'émission de deux données d'émission successives P1 et P2 est fixe et est supérieur au temps de réaction Tr entre l'émission de la donnée d'émission P1 et la réception d'une donnée de réponse P1R de manière à éviter un recouvrement entre des données de réponse P1R et d'émission P2.

La figure 2b représente l'évolution au cours du temps des données P1, P2, P3 envoyées à l'organe d'identification après un passage aller dans les relais pirates. Cette figure met en évidence le temps de passage aller Δt1 des données d'émission dans les relais pirates.

La figure 2c représente l'évolution au cours du temps des données de réponse P1R, P2R, P3R renvoyées par l'organe d'identification au dispositif de reconnaissance après traitement de celles-ci. Le délai T1 correspond au temps de traitement de la donnée d'émission P1 par l'organe d'identification. Ce temps de traitement T1 est constant et est connu par le dispositif de reconnaissance.

La figure 2d représente l'évolution au cours du temps des données de réponse P1R, P2R, P3R réceptionnées par le dispositif de reconnaissance. Le temps Δt2 représente le temps de passage retour des données de réponse dans les relais pirates. Le temps Tr représente le temps de réaction entre l'émission de la donnée d'émission P1 et la réception de la donnée de réponse P1R.

Pour détecter la présence d'un relais pirate, l'invention divulguée par le document DE 198 02 526, propose de mesurer le temps de réaction Tr entre l'émission de la donnée d'émission P1 et la réception de la donnée de réponse P1R.

Lorsqu'un relais pirate est présent dans l'échange de donnée, le temps de réaction Tr est égale à l'addition du temps de traitement de l'organe d'identification T1 et des temps de passages aller et retour Δt1, Δt2 dans chaque relais pirate. Lorsque ce temps de réaction Tr est supérieur à un seuil prédéterminé, le dispositif de reconnaissance n'autorise pas le déverrouillage du véhicule. Généralement, le seuil prédéterminé est légèrement supérieur au temps de traitement T1 de l'organe d'identification car la vitesse de déplacement des données est négligeable.

Cependant, un tel système n'a pas un degré de sécurisation suffisant. En effet, pour éviter d'être détecté, le relais pirate peut lors d'un premier échange de données, mesurer la durée du temps d'initialisation T0, de l'intervalle de temps T, et éventuellement les caractéristiques en amplitude et en fréquence des données P1, P2, P3. Puis lors d'un second échange de données, le relais pirate peut envoyer une donnée P1 avec une avance égale au temps introduit par les passages des données dans les relais pirate de manière à compenser le délai dû au passage dans ces relais.

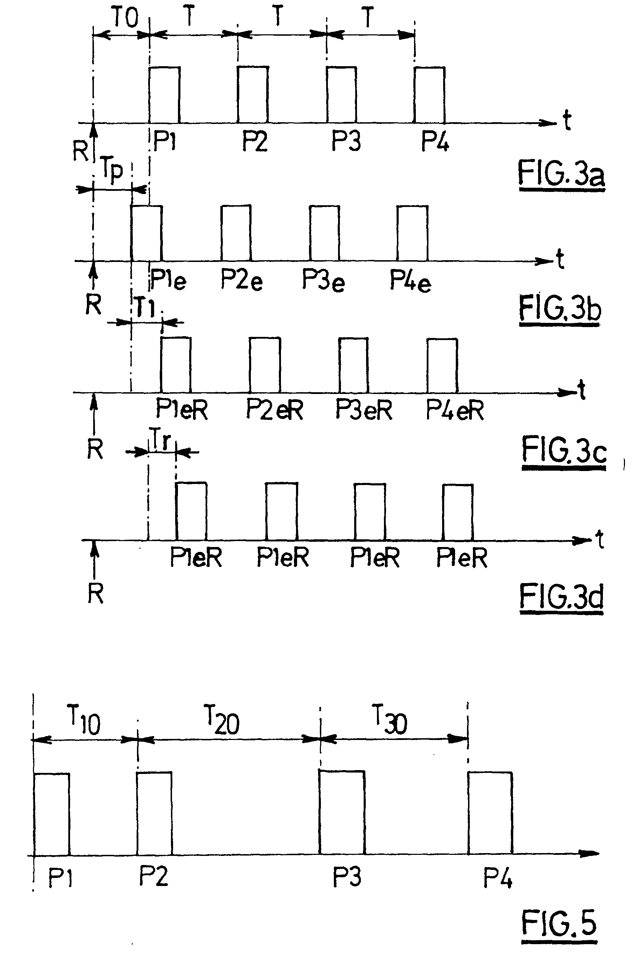

Les figures 3a à 3d sont des représentations graphiques d'un échange de données entre un dispositif de reconnaissance et un organe d'identification en présence d'un relais pirate enregistreur.

En particulier, la figure 3a représente l'évolution au cours du temps des données d'émission P1, P2, P3 émises par le dispositif de reconnaissance lors d'un premier échange de données.

Un échange de données est défini comme une interrogation de l'organe d'identification par l'envoi du protocole de reconnaissance par le dispositif de reconnaissance.

Lors du premier échange de données illustré en figure 3a, un relais pirate enregistreur capte les données d'émission P1, P2, P3 et enregistre le temps d'initialisation T0, l'intervalle de temps T ainsi que éventuellement les caractéristiques en amplitude et en fréquence des données.

Lors d'un second échange de données illustré en figure 3b, le relais pirate déclenche l'échange des données correspondant à la phase d'authentification AUT de l'organe d'identification. Lorsque cette phase est terminée et après un intervalle de temps Tp défini par rapport à un événement de référence R, il envoie une donnée d'émission P1e qu'il a enregistré lors du premier échange de donnée. L'intervalle de temps Tp correspond à l'intervalle de temps T0 précédemment enregistré moins les temps de passages aller et retour Δt1 +Δt2 dans les relais pirates.

La figure 3b représente l'évolution au cours du temps des données d'émission P1e, P2e, P3e envoyées par le relais pirate enregistreur lors du second échange de données.

L'avancement de la phase d'antipiratage ANP par rapport à la phase d'authentification AUT n'est pas détecté par l'organe d'identification puisque d'une part celui-ci ne connaît pas l'intervalle de temps T0 et puisque d'autre part contrairement au code d'identification, l'impulsion P1 n'est pas modifiée à chaque échange de données entre le dispositif de reconnaissance et l'organe d'identification.

La figure 3c représente l'évolution au cours du temps des données de réponse P1eR, P2eR, P3eR renvoyées par l'organe d'identification après traitement de celles-ci. Le délai T1 correspond au temps de traitement de la donnée de réponse P1e par l'organe d'identification.

La figure 3d représente l'évolution au cours du temps des données de réponse P1eR reçu par le dispositif de reconnaissance. Le temps de réaction Tr est égal au temps de traitement T1 de l'organe d'identification. En conséquence, la présence de relais pirate ne peut plus être détectée. Et le système dit « mains libre » n'est plus suffisamment sécurisé.

Le but de l'invention est de fournir un procédé de sécurisation plus fiable.

A cet effet, l'invention a pour objet un procédé de sécurisation d'une communication entre un dispositif de reconnaissance et un organe d'identification apte à communiquer avec le dispositif de reconnaissance par un échange de données déterminé par un protocole de reconnaissance, une de ces données correspondant à un événement de référence, le procédé communiquant de manière à ce que le dispositif de reconnaissance puisse authentifier l'organe d'identification pour commander le déverrouillage d'ouvrants d'un véhicule et/ou autoriser le démarrage d'un véhicule et comportant en outre :
- après un temps d'initialisation défini par rapport à l'événement référentiel du protocole de reconnaissance, une étape d'émission par le dispositif de reconnaissance d'au moins deux données d'émission,
- une étape d'émission par l'organe d'identification d'au moins deux données de réponse en réponse aux données d'émission,
- une étape de mesure d'un temps de réaction entre l'émission d'une donnée et la réception d'une donnée réponse correspondante par le dispositif de reconnaissance, et une étape de vérification que le temps de réaction mesuré est inférieur à un seuil prédéterminé
caractérisé en ce que l'on fait varier l'intervalle de temps entre l'émission de deux données d'émission successives et/ou le temps d'initialisation.

L'invention sera mieux comprise au cours de la description explicative détaillée qui va suivre en référence aux figures sur lesquelles :
- la figure 1 représente schématiquement un exemple de protocole de reconnaissance ,
- les figures 2a à 2d sont des représentations graphiques d'un échange de données entre le dispositif de reconnaissance et l'organe d'identification en présence d'un relais pirate,
- les figures 3a à 3d sont des représentations graphiques d'un échange de données entre le dispositif de reconnaissance et l'organe d'identification en présence d'un relais pirate enregistreur,
- la figure 4a représente l'évolution au cours du temps des données émises par un dispositif de reconnaissance selon un premier mode de réalisation de la présente invention lors d'un premier échange de données,
- la figure 4b représente l'évolution au cours du temps des données émises par un dispositif de reconnaissance selon un premier mode de réalisation de la présente invention lors d'un second échange de données,
- la figure 5 représente l'évolution au cours du temps des données émises par un dispositif de reconnaissance selon un deuxième mode de réalisation de la présente invention lors d'un échange de données,
- les figures 6a et 6b représentent l'évolution au cours du temps des données émises par un dispositif de reconnaissance selon un troisième mode de réalisation de la présente invention lors d'un échange de données.

Le procédé de sécurisation selon la présente invention fait varier de manière aléatoire au moins un des paramètres caractéristiques des données d'émission P1, P2, P3 et/ou des données de réponse P1R, P2R, P3R à chaque échange de données et/ou dans un même échange de données.

Les paramètres caractéristiques des données d'émission P1, P2, P3 et/ou des données de réponse P1R, P2R, P3R sont l'intervalle de temps entre deux données successives T, le temps d'initialisation T0, la fréquence de la porteuse, la largeur des données lorsque les données sont transmises sous forme d'impulsions et la codification des données de réponse.

Seuls les modes de réalisation dans lesquels l'intervalle de temps entre deux données successives T et le temps d'initialisation T0 varient ont été décrit dans la présente description. Cependant, la présente invention n'est nullement limitée à ces modes de réalisation.

En outre, il est possible de faire varier plusieurs paramètres caractéristiques à chaque échange de données et/ou dans un même échange de données.

De plus, ces paramètres peuvent varier de manière aléatoire ou selon une séquence prédéterminée.

Selon un premier de mode de réalisation de la présente invention, le temps d'initialisation T0 varie à chaque échange de données entre le dispositif de reconnaissance et l'organe d'identification.

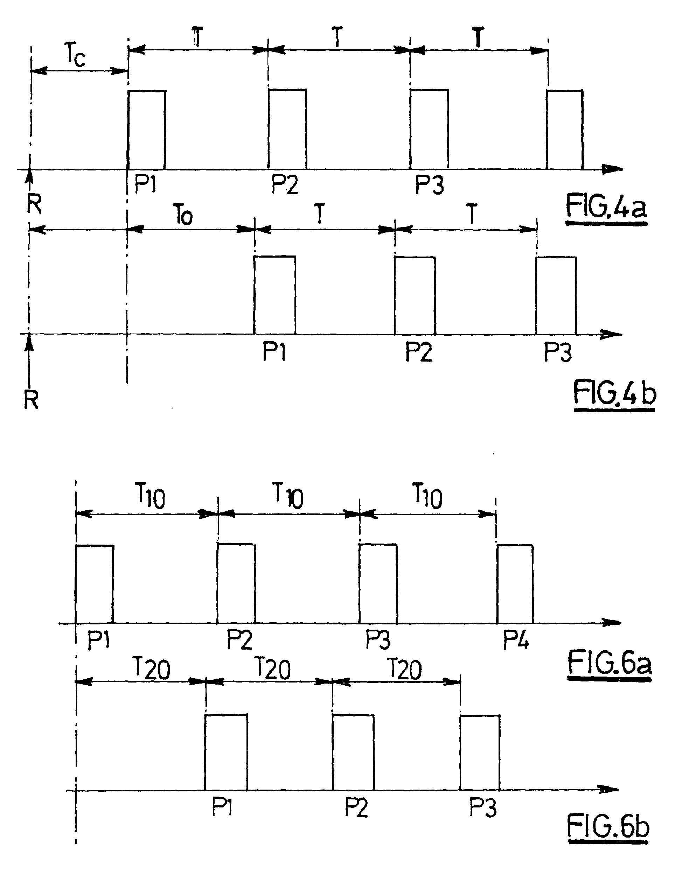

Les figures 4a et 4b représentent l'évolution au cours du temps des données d'émission P1, P2, P3 envoyées par l'organe d'identification lors d'un premier et d'un second échanges de données.

Le temps d'initialisation T0 est défini par le temps séparant un événement de référence R du protocole de reconnaissance et l'envoi de la première donnée d'émission P1 de la phase d'antipiratage ANP (Figure 3). L'événement de référence R peut être défini par exemple par la fin de l'étape de réveil RE, de l'étape de sélection SE ou de l'étape de réponse RP.

Selon la présente invention, le temps d'initialisation T0 varie de manière aléatoire à chaque échange de données , le relais pirate ne peut plus déterminer le moment où la donnée P1 est envoyée par le dispositif de reconnaissance. Par conséquent, il ne peut pas envoyer une donnée d'émission P1e préalablement enregistrée avec une avance correspondant au délai Δt1 +Δt2 introduit par le passage aller et retour dans les relais pirates.

Selon un second mode de réalisation de la présente invention, l'intervalle de temps T entre l'émission de deux données successives P1 et P2 varie de manière aléatoire dans un même échange de données et à chaque échange de données. La figure 5 représente l'évolution au cours du temps des données d'émission P1, P2, P3 envoyées par l'organe d'identification. Le dispositif de reconnaissance émet une donnée d'émission P2 après un intervalle de temps T10 et une donnée P3 après une intervalle de temps T20. Les intervalles de temps T10, T20, T30 sont aléatoires et varient dans une plage prédéterminée mais ils sont toujours supérieurs au temps de réaction entre l'émission et la réception d'une donnée afin d'éviter le recouvrement entre deux données successives.

Comme l'intervalle de temps T varie de manière aléatoire dans un même échange de données et à chaque échange de données, le relais pirate ne peut pas envoyer une donnée P1e enregistrée lors d'un premier échange de données avec une avance correspondant au temps de passage dans un relais pirate car il ne peut pas déterminer le moment où une donnée d'émission P2 sera émise.

En variante, il est possible de faire varier à la fois le temps d'initialisation T0 et l'intervalle de temps T. Le temps d'initialisation T0 et l'intervalle de temps T sont des paramètres caractéristiques temporels du dispositif de reconnaissance.

Selon un troisième mode de réalisation de la présente invention, l'intervalle de temps T varie à chaque échange de données entre le dispositif de reconnaissance et l'organe identifiant. Les figures 6a et 6b représentent l'évolution au cours du temps des données d'émission P1, P2, P3 envoyées par un organe d'identification. Lors d'un premier échange de données (Figure 6a), le dispositif de reconnaissance envoie des données d'émission P1, P2, P3, chacune séparée par un intervalle de temps T10. Puis lors d'un second échange de données (Figure 6b), l'intervalle de temps séparant deux données successives P1 et P2 est différent de l'intervalle de temps T10 et est par exemple, égale à T20. Ainsi, il n'est pas possible pour le relais pirate de déterminer par avance le moment où une donnée est émise par le dispositif de reconnaissance.

Par ailleurs, le dispositif de reconnaissance peut effectuer une série de mesure de temps de réaction entre l'émission de plusieurs données P1, P2, P3, P4 et la réception des donnée correspondantes P1R, P2R, P3R et ne prendre en considération que certaines mesures. Par exemple, pour cent temps de réaction mesurés dans un même échange de données, on pourra ne prendre en compte que les quatre-vingt-dix bits de temps de réaction les plus petits , de manière à écarter les temps de réaction aberrants dus à des parasites de communication. Plus particulièrement, dans ce mode de calcul, on se donne un nombre entier prédéfini de temps de réaction mesurés qui seront pris en compte En effet, la transmission de quatre bits de données peut ne donner lieu qu'à trois mesure de temps de réaction.

En variante et/ou en combinaison avec le mode de prise en compte de bits décrit ci-dessus, il est également possible de calculer la moyenne de plusieurs mesures de temps de réaction puis d'effectuer une comparaison entre la moyenne obtenue et une valeur de seuil prédéterminée pour conclure selon le résultat que fournit cette comparaison si le dispositif de reconnaissance doit ou non autoriser le déverrouillage du véhicule.

## Revendications

1. Procédé de sécurisation d'une communication entre un dispositif de reconnaissance et un organe d'identification apte à communiquer avec le dispositif de reconnaissance par un échange de données déterminé par un protocole de reconnaissance, une de ces données correspondant à un événement de référence (R), le procédé est apte à communiquer de manière à ce que le dispositif de reconnaissance puisse authentifier l'organe d'identification pour commander le déverrouillage d'ouvrants d'un véhicule et/ou autoriser le démarrage d'un véhicule et comporte en outre :
- après un temps d'initialisation (T0) défini par rapport à l'événement référentiel (R) du protocole de reconnaissance, une étape d'émission par le dispositif de reconnaissance d'au moins deux données d'émission (P1, P2),
- une étape d'émission par l'organe d'identification d'au moins deux données de réponse (P1R, P2R) en réponse aux données d'émission (P1, P2),
- une étape de mesure d'un temps de réaction (Tr) entre l'émission d'une donnée (P1) et la réception d'une donnée réponse correspondante (P1R) par le dispositif de reconnaissance, et une étape de vérification que le temps de réaction mesuré est inférieur à un seuil prédéterminé
**caractérisé en ce que** l'on fait varier aléatoirement l'intervalle de temps (T) entre l'émission de deux données d'émission successives (P1, P2) et/ou le temps d'initialisation (T0).

2. Procédé selon la revendication 1, dans lequel on fait varier au moins l'intervalle de temps (T) entre l'émission de deux données d'émission successives (P1, P2) au cours du même échange de données entre le dispositif de reconnaissance et l'organe d'identification.

3. Procédé selon l'une des revendications 1 ou 2, dans lequel on fait varier l'intervalle de temps (T) entre l'émission de deux données d'émission successives (P1, P2) et/ou le temps d'initialisation (T0) à chaque échange de données entre le dispositif de reconnaissance et l'organe d'identification.

4. Procédé selon l'une des revendications de 1 à 3, comportant en outre une phase d'authentification (AUT) comportant notamment une étape de réveil (RE), une étape de requête (RQ), une étape d'anticollision (ANC), une étape de sélection (SE) et éventuellement une étape de réponse (RP).

5. Procédé selon l'une des revendications de 1 à 4, dans lequel l'étape d'émission par le dispositif de reconnaissance consiste en l'émission de plusieurs données d'émission (P1, P2, P3) et l'étape d'émission par l'organe d'identification consiste en l'émission de plusieurs données de réponse correspondantes (P1R, P2R, P3R) et comportant en outre :
- une étape de mesure de plusieurs temps de réaction (Tr) entre l'émission et la réception de plusieurs données (P1, P2, P3, P4),
- une étape de calcul de la moyenne de ces temps de réaction,
- et une étape de comparaison de celle-ci au seuil prédéterminé pour authentifier l'organe d'identification.

6. Procédé selon l'une des revendications de 1 à 5, dans lequel les temps de réaction (Tr) sont les n plus petits temps de réactions mesurés, n étant un entier prédéfini.

7. Procédé selon l'une des revendications de 1 à 5, dans lequel l'événement référentiel (R) du protocole de reconnaissance correspond à l'envoi d'une donnée de réponse (RP) par l'organe d'identification.

8. Procédé selon l'une des revendications de 1 à 5, dans lequel l'événement référentiel (R) du protocole de reconnaissance correspond à l'envoi d'une donnée de sélection (SE) par le dispositif de reconnaissance.

9. Procédé selon l'une des revendications de 1 à 5, dans lequel l'événement référentiel (R) du protocole de reconnaissance correspond à l'envoi d'une donnée d'initialisation (RE) par le dispositif de reconnaissance.
